# EUROPEAN PATENT APPLICATION

(11) **EP 2 018 058 A1**
(43) Date of publication of application: **21.01.2009**
(21) Application number: 08160540.4
(22) Date of filing: 16.07.2008
(51) Int. Cl.: H04N 7/14, H04N 7/15

(54) **Method for displaying speaker in video conference and device and system thereof**

(30) Priority: 17.07.2007 CN 200710130326; 17.03.2008 WO PCT/CN2008/070510
(71) Applicant: Huawei Technologies Co., Ltd., Longgang District Shenzhen 518129 (CN)
(72) Inventor: Ma, Zhangping, Shenzhen, Guangdong Province 518129 (CN); Li, Jiu, Shenzhen Guangdong 518129 (CN); Liu, Yong, Shenzhen Guangdong 518129 (CN)
(74) Representative: Hengelhaupt, Jürgen

(57) **Abstract**

A method for displaying a speaker in a video conference includes: acquiring real time audio data of each speaker in the video conference and calculating audio energy of each speaker; determining a current speaker according to the audio energy of the speaker based on a predetermined rule; acquiring real time video data of the current speaker according to the real time audio data of the current speaker; and transmitting the real time video data of the current speaker to a conference terminal. A system for displaying a speaker in a video conference includes a conference media server and a conference terminal. The present invention also provides a conference media server and a conference terminal. According to the present invention, the participants of the conference may recognize more distinctively facial expression and body language of the speaker by highlighting the video screen of the current speaker, thereby enhancing the communication effects of the video conference.

## Description

This application claims the priorities of the Chinese patent application No. 200710130326.6 filed with the Chinese Patent Office on July 17, 2007, titled "Method for Displaying Speaker in Video Conference, and System, Server and Terminal Thereof" and the patent application No. PCT/CN2008/070510 filed on March 17, 2008, titled "Method for Displaying Speaker in Video Conference and Device and System Thereof", the entire contents of which are incorporated herein by reference.

### Field of the Invention

The present invention relates to the field of communications technology, and in particular to a method for displaying a speaker in a video conference and device and system thereof.

### Background of the Invention

A video conference is a widely used communicating means in modem communication. With the video conference, participants of the conference, wherever they are, may find it very convenient to communicate with each other with speech and video.

At present, a common processing method for audio in the video conference system is as follows. There are one or more mixers in the video conference system. After the conference begins, several media streams with maximal sound volume are selected from audio data of a plurality of conference terminals. The mixers make these several media streams superposed with each other, and the superposed audio data are played back by the conference terminals.

A common processing method for video in the video conference system is as follows. All the participants of the conference may be displayed at each conference terminal without distinction, or the administrator may control manually a video display mode (which parties are displayed, size of a screen, etc.) of each conference terminal, or each participant of the conference may control manually the video display mode of the conference terminal used by himself or herself.

In the video conference, if there are a large number of participants, a large number of video screens are accordingly displayed at the conference terminal. In fact, only a small number of speakers, usually one or two, may speak simultaneously. It is the video of these one or two speakers that all the participants of the conference are interested in and wish to watch attentively. Because the conventional video conference system is unable to automatically highlight a current speaker, the participants of the conference usually have to go through a plurality of screens before arriving at the screen of the current speaker, and then can recognize facial expression and body language of the speaker. When the speaker changes, the participants of the conference have to search for again and find this new speaker. This situation happens frequently in a conference where there are multiple parties in mutual discussion and communication, which brings great inconvenience to all the participants.

### Summary of the Invention

Embodiments of the present invention provides a method for displaying a speaker in a video conference and device and system thereof which enables participants of the video conference to find promptly a screen of a current speaker.

According to a first aspect of the present invention, there is provided a method for displaying a speaker in a video conference, including: acquiring real time audio data of speaker in the video conference and calculating audio energy of speaker; determining a current speaker according to the audio energy of the speaker based on a predetermined rule; acquiring real time video data of the current speaker according to the real time audio data of the current speaker; and transmitting the real time video data of the current speaker to a conference terminal.

According to a second aspect of the present invention, and with a certain relationship to the solution of a method according to the above mentioned first aspect, there is provided a conference media server, including: a selecting module configured to calculate audio energy of a speaker according to real time audio data of the speaker and determine a current speaker according to the audio energy of speaker based on a predetermined rule; a combining module configured to set the current speaker determined by the selecting module as an object to be highlighted and acquire and combine real time video data of the current speaker; and a transmitting module configured to transmit the real time video data re-combined by the combining module to a conference terminal.

According to a third aspect of the present invention and with a certain relationship to the solution of a method according to the above mentioned first aspect, there is provided a system for displaying a speaker in a video conference, including a conference media server described above, and further including a conference terminal configured to receive the real time video data of the current speaker transmitted by the conference media server and display the real time video data of the current speaker in a form of a video screen.

According to a fourth aspect of the present invention and with a certain relationship to the solution of a method according to the above mentioned first aspect, there is provided a conference terminal, including: a selecting module configured to calculate audio energy of a speaker according to real time audio data of the speaker and determine a current speaker according to the audio energy of speaker based on a predetermined rule; a combining module configured to have the current speaker determined by the selecting module as an object to be highlighted and re-combine real time video data of the speaker; and a displaying module configured to display the real time video data recombined in the combining module in a form of a video screen.

According to a fifth aspect of the present invention and with a certain relationship to the solution of a method according to the above mentioned first aspect, there is provided a system for displaying a speaker in a video conference, including a conference terminal described above, and further including a conference media server configured to transfer real time audio data and real time video data of a speaker.

In technical solutions provided in the embodiments of the present invention, the current speaker in the video conference is determined through the audio energy of the speakers, and the video screen of the current speaker is highlighted on a conference terminal, so that participants of the conference can determine the current speaker promptly and recognize distinctively the facial expression and the body language of the current speaker, thereby enhancing communication effect of the video conference.

### Brief Description of the Drawings

Figure 1 is a flow chart of a method for displaying a speaker in a video conference according to an embodiment of the present invention;

Figure 2 is a first application scenario of the method for displaying the speaker in the video conference according to the present invention;

Figure 3 is a second application scenario of the method for displaying the speaker in the video conference according to the present invention;

Figure 4 is a third application scenario of the method for displaying the speaker in the video conference according to the present invention;

Figure 5 is a schematic diagram of a first display mode of the method for displaying the speaker in the video conference according to an embodiment of the present invention;

Figure 6 is a schematic diagram of a second display mode of the method for displaying the speaker in the video conference according to an embodiment of the present invention;

Figure 7 is a schematic diagram of a third display mode of the method for displaying the speaker in the video conference according to an embodiment of the present invention;

Figure 8 is a structural diagram of a system for displaying the speaker in the video conference according to an embodiment of the present invention;

Figure 9 is a structural diagram of a system for displaying the speaker in the video conference according to another embodiment of the present invention;

Figure 10 is a structural diagram of a conference media server according to an embodiment of the present invention;

Figure 11 is a structural diagram of a conference terminal according to an embodiment of the present invention.

### Detailed Description of the Embodiments

Objects, technical solutions and advantage of the present invention will become more apparent from the following detailed description of embodiments of the present invention in conjunction with the drawings.

In an embodiment of the present invention, after a current speaker in a video conference is determined, a video screen of the current speaker is highlighted on the conference terminal, which facilitates participants of the conference to observe facial expression and body language of the speaker, thereby enhancing communication effect.

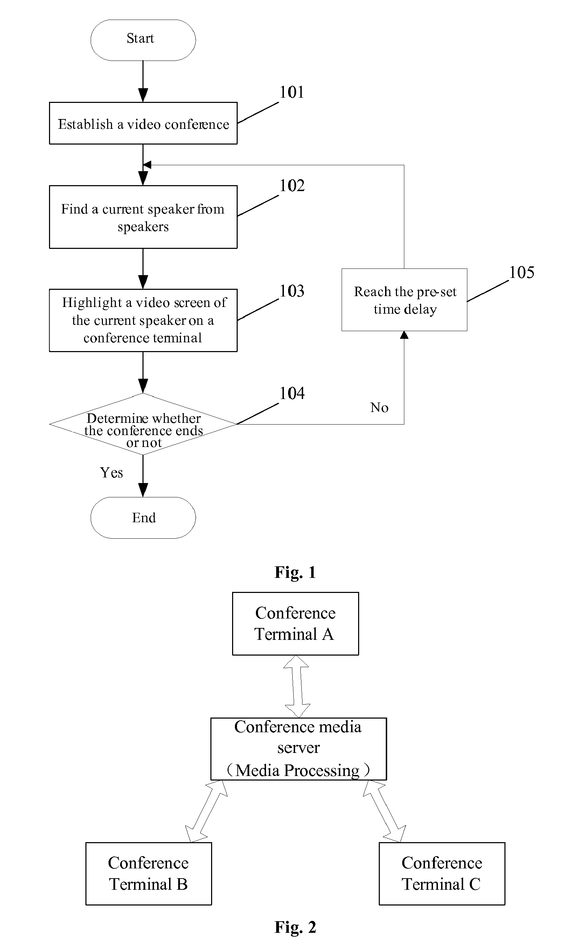

Referring to Figure 1, a method for displaying a speaker in a video conference provided by an embodiment of the present invention includes flowing steps.

In step 101, a video conference is established.

In step 102, a current speaker is determined from a group of speakers.

Specifically, a method for finding the current speaker from the speakers is as follows.

Real time audio data of the speakers are acquired, audio energy of each speaker is calculated, and the current speaker is determined according to the audio energy of the speakers based on a predetermined rule. The predetermined rule may be that a speaker with maximal audio energy among a group of the speakers is determined as the current speaker, or may be that a speaker whose audio energy is above a predetermined threshold among a group of the speakers is determined as the current speaker. The predetermined rule is not limited to the above two kinds, and other rules may be set as needed in determining the current speaker.

In the above method, the current speaker may be either one speaker or more. The most representative application scenario is to find one person as the current speaker from a group of the participants. A secondary representative application scenario is to determine any one speaker whose audio energy is above the predetermined threshold as the current speaker.

The real time audio data of the speakers may be acquired by a conference media server in the video conference system. This method is applicable to a conference system in which the media server performs media processing in a centralized manner. Figure 2 is a first application scenario of the method for displaying the speaker in the video conference according to the present invention, in which A, B and C are all common conference terminals, a conference media server provides all conference media processing functions, and real time audio data of the speakers are transmitted, in a form of media streams, between the conference media server and the conference terminals.

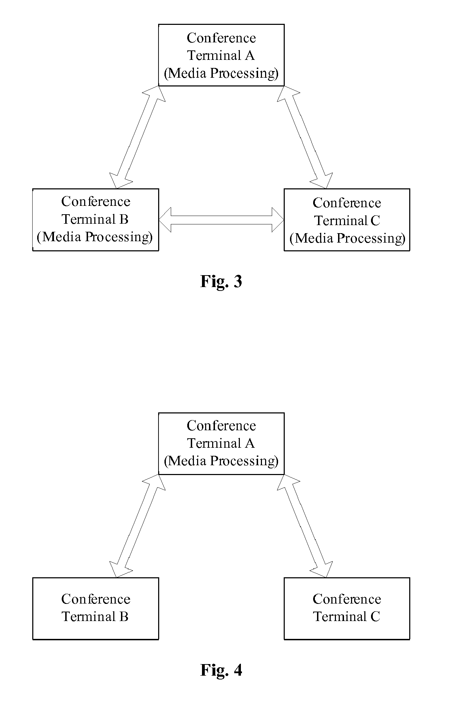

The real time audio data of the speakers may also be acquired by the conference terminals. This method is applicable to a conference system in which the conference terminals perform media processing in a distributed manner. Figure 3 is a second application scenario of the method for displaying the speaker in the video conference according to the present invention, in which there is no independent media processing apparatus, each conference terminal receives media data from other conference terminals and completes the media processing by itself. This method is also applicable to a system in which one of the conference terminals provides the conference media processing functions. Figure 4 is a third application scenario of the method for displaying the speaker in the video conference according to the present invention, in which a conference terminal A has the media processing functions and are capable of providing a conference media service for itself as well as for conference terminals B and C.

The real time audio data of each speaker and real time video data thereof are associated with each other and both have same conference terminal identification. After the current speaker is determined according to the real time audio data, the real time video data of this current speaker are determined according to the conference terminal identification of the real time audio data for displaying the video screen of the current speaker on the conference terminal. Of course, the real time audio data of each speaker and the real time video data thereof may also be associated with each other by way of any other means known to those skilled in the art.

In step 103, a layout of the video screens is updated on the conference terminals to highlight the video screen of the current speaker.

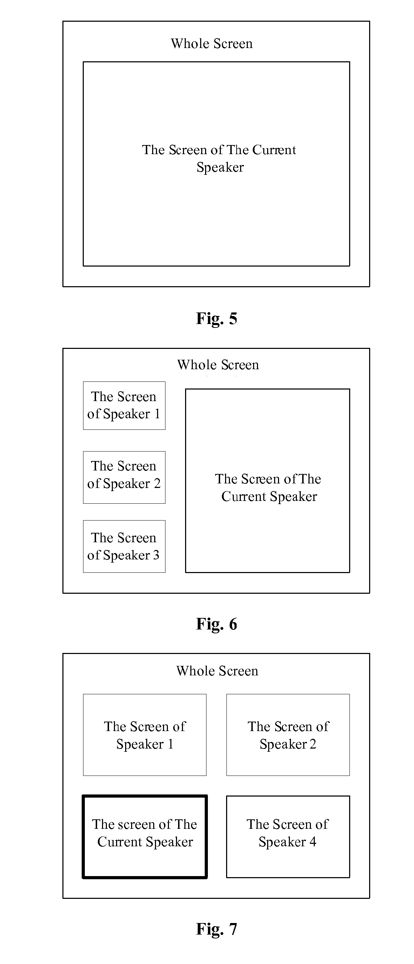

Specifically, a method for highlighting the video screen of the current speaker on the conference terminals may be implemented by the following three modes.
1) Referring to Figure 5, only the video screen of the current speaker is displayed on the conference terminals.
2) Referring to Figure 6, the video screen of the current speaker determined is zoomed-in on the conference terminals, so that the video screen of the current speaker is displayed in such a form that its video screen is larger than those of any other speakers.
3) Referring to Figure 7, the video screen of the current speaker is displayed with a special mark on the conference terminals.

The special mark may be a frame denoting the video screen of the current speaker, or may be another color used as a background color of the video screen of the current speaker, or may also be a number, such as ①, attached to the video screen of the current speaker.

Further, a process of highlighting the video screen of the current speaker may be implemented either on the conference media server or on the conference terminal.

The method of implementing the highlighting process on the conference media server is as follows. The real time video data of each speaker are acquired by the conference media server, and the current speaker determined is an object to be highlighted to combine new video data. For example, to achieve the effect shown in Figure 5, only the real time video data of the current speaker are included in the new video data. To achieve the effect shown in Figure 6, the real time video data of the current speaker are expanded and zoomed-in and the real time video data of other speakers and the expanded and zoomed-in real time video data of the current speaker are included in the new video data. To achieve the effect shown in Figure 7, frame data corresponding to the real time video data of the current speaker are converted so as to be distinguished from frame data of other speakers, or data corresponding to ①and the like are added into the real time video data of the current speaker. The newly combined video data are transmitted to each conference terminal. After receiving the video data, the conference terminal displays the video screen of the speaker on the display apparatus in a form of video screens. This method is applicable to the system shown in Figure 2.

The method of implementing the highlighting process on the conference terminal is as follows. The real time video data of each speaker are acquired by the conference terminal, the current speaker determined is the object to be highlighted to combine new video data. The specific method for combining is the same as above and will not be repeated herein. The new video data are displayed on the display apparatus of the conference terminal in the form of video screens. This method is applicable to the system shown in Figure 3. Alternatively, the conference terminal may transmit the new video data to other conference terminals besides displaying the new video screen on its own display apparatus. This method is applicable to the system shown in Figure 4.

In step 104, it is determined whether the conference ends or not, and the process proceeds to step 105 if the conference does not end, otherwise the conference ends.

In step 105, the process returns to step 102 after reaching a pre-set time delay.

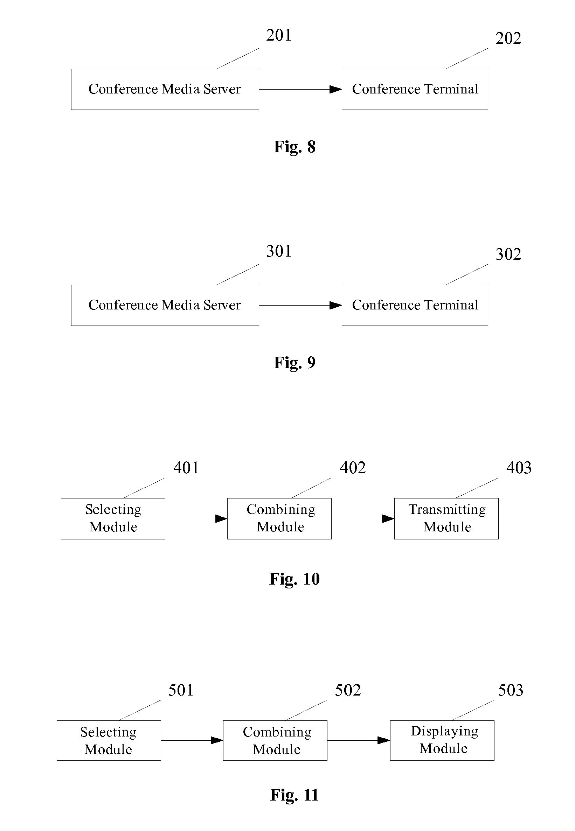

Referring to Figure 8, a system for displaying the speaker in the video conference according to an embodiment of the present invention includes a conference media server 201 for calculating audio energy of a speaker according to real time audio data of the speaker, determining a current speaker according to the audio energy of the speaker based on a predetermined rule, re-combining the real time video data of the speaker, setting the current speaker as an object to be highlighted, and transmitting the re-combined real time video data; and a conference terminal 202 for receiving the real time video data transmitted by the conference media server 201 and displaying the real time video data in a form of video screen.

Specifically, a process in which the conference media server 201, after determining the current speaker according to the audio energy of the speaker based on the predetermined rule, take the current speaker as the object to be highlighted is implemented as follows.

After determining the current speaker according to the real time audio data of the current speaker, the real time video data of the current speaker are obtained according to a conference terminal identification corresponding to the real time audio data, and the obtained real time video data are set as the object to be highlighted.

Referring to Figure 9, a system for displaying the speaker in the video conference according to an embodiment of the present invention includes a conference media server 301 for transmitting real time audio data and real time video data of a speaker; a conference terminal 302 for receiving the real time audio data and the real time video data transmitted by the conference media server 301, calculating the audio energy of each speaker according to the real time audio data, determining a current speaker according to the audio energy of the speaker based on a predetermined rule, re-combining the real time video data of the speaker, setting the current speaker as an object to be highlighted, and displaying the re-combined real time video data.

Referring to Figure 10, a conference media server according to an embodiment of the present invention includes a selecting module 401 for calculating audio energy according to real time audio data of a speaker and determining a current speaker according to the audio energy of each speaker based on a predetermined rule; a combining module 402 for setting the current speaker determined by the selecting module 401 as an object to be highlighted and recombining the real time video data of the speaker, and a transmitting module 403 for transmitting the real time video data re-combined by the combining module 402 to a conference terminal.

Specifically, a process in which the combining module 402 re-combines the real time video data of the speaker may be implemented by the following modes.
1) To achieve the effect shown in Figure 5, the real time video data corresponding to the current speaker determined by the selecting module 301 are selected from the real time video data and the real time video data of the current speaker are set as new real time video data.
2) To achieve the effect shown in Figure 6, the real time video data of the current speaker are expanded and zoomed-in and the real time video data of other speakers are combined with the expanded and zoomed-in real time video data of the current speaker to form new real time video data.
3) To achieve the effect shown in Figure 7, frame data corresponding to the real time video data of the current speaker are converted so as to be distinct from frame data of other speakers, or data corresponding to ① and the like are added into the real time video data of the current speaker, alternatively background data in the real time video data of the current speaker are converted into data corresponding to other colors, and the converted real time video data of the current speaker are combined with the real time video data of other speakers to form new real time video data.

Specifically, the selecting module 401 includes a calculating unit configured to calculate the audio energy of the speakers and a selecting unit configured to determine the current speaker according to the audio energy of each speaker based on a predetermined rule. The predetermined rule may be that a speaker with the maximal audio energy among a group of the speakers is determined as the current speaker, or a speaker whose audio energy is above a predetermined threshold among a group of the speakers is determined as the current speaker.

Referring to Figure 11, a conference terminal according to an embodiment of the present invention specifically includes a selecting module 501 configured to calculate audio energy of a speaker according to real time audio data of the speaker and determine a current speaker according to the audio energy of each speaker based on a predetermined rule, a combining module 502 configured to have the current speaker determined by the selecting module 501 as an object to be highlighted and re-combine real time video data of the speakers and a displaying module 503 configured to display, in a form of video screen, the real time video data recombined in the combining module 502.

Specifically, the selecting module 501 includes a calculating unit configured to calculate the audio energy of the speakers and a selecting unit configured to determine the current speaker according to the audio energy of each speaker based on the predetermined rule. The predetermined rule may be that a speaker with the maximal audio energy among a group of the speakers is determined as the current speaker, or a speaker whose audio energy is above a predetermined threshold among a group of the speakers is determined as the current speaker.

It should be understood by those skilled in the art that part or a group of modules or respective steps in the above embodiments may be implemented by instructing a relevant hardware by a program. The program may be stored in a computer readable storage media such as a ROM/RAM, a magnetic disk, an optical disk and the like. Alternatively the modules and steps may be made into respective integrated circuit modules, or a plurality of modules or steps of the modules or steps may be made into a single integrated circuit module. Consequently, the present invention is not limited to any combination of a specific hardware or software.

According to the embodiments of the present invention, by finding the current speaker in a video conference and highlighting the video screen thereof, it is helpful for the participants of the conference to wholly and accurately grasp the speaking contents of the speakers and prevent the participants of the conference from searching for many times to find the current speaker, which brings more convenience in use. Furthermore, the video screen of the current speaker may be highlighted by a way that the participants of the conference are interested in, which enhances flexibility of application.

The preferred embodiments of the present invention have been described above and are not intended to limit the present invention. Any modifications and equivalent substitutions and improvements within the spirit and scope of the present invention should be encompassed by the protection scope of the present invention.

## Claims

1. A method for displaying a speaker in a video conference, **characterized by** comprising:
acquiring real time audio data of speaker in the video conference and calculating audio energy of speaker;
determining a current speaker according to the audio energy of the speaker based on a predetermined rule;
acquiring real time video data of the current speaker according to the real time audio data of the current speaker; and
transmitting the real time video data of the current speaker to a conference terminal.

2. The method of claim 1, **characterized in that** the predetermined rule comprises:
a speaker with maximal audio energy among a group of speakers is determined as the current speaker, or
a speaker whose audio energy is above a predetermined threshold among a group of speakers is determined as the current speaker.

3. The method of claim 1, **characterized in that** before transmitting the real time video data of the current speaker to the conference terminal, the method further comprises:
re-combining the real time video data of the current speaker according to a required displaying mode.

4. The method of claim 3, **characterized in that** the displaying mode comprises:
only displaying a video screen of the current speaker; or
displaying a video screen of the current speaker in a scale larger than video screens of other speakers; or
displaying a video screen of the current speaker by setting a mark.

5. A conference media server, **characterized by** comprising:
a selecting module configured to calculate audio energy of a speaker according to real time audio data of the speaker and determine a current speaker according to the audio energy of speaker based on a predetermined rule;
a combining module configured to set the current speaker determined by the selecting module as an object to be highlighted and acquire and combine real time video data of the current speaker; and
a transmitting module configured to transmit the real time video data re-combined by the combining module to a conference terminal.

6. The conference media server of claim 5, **characterized in that** the selecting module further comprises:
a calculating unit configured to calculate the audio energy of the speaker; and
a selecting unit configured to determine the current speaker according to the audio energy of speaker based on the predetermined rule, the predetermined rule comprising a speaker with maximal audio energy among a group of speakers is determined as the current speaker, or a speaker whose audio energy is above a predetermined threshold among a group of speakers is determined as the current speaker.

7. A system for displaying a speaker in a video conference, **characterized by** comprising a conference media server according to claim 5, and further comprising:
a conference terminal configured to receive the real time video data of the current speaker transmitted by the conference media server and display the real time video data of the current speaker in a form of a video screen.

8. The system of claim 7, **characterized in that** the conference terminal displays the video screen of the current speaker in accordance with the following steps of:
re-combining the real time video data of the speaker according to a required displaying mode; and
displaying the video screen of the current speaker according to the recombined real time video data.

9. The system of claim 8, **characterized in that** the displaying mode comprises:
only displaying the video screen of the current speaker; or
displaying the video screen of the current speaker in a scale larger than video screens of other speakers; or
displaying the video screen of the current speaker by setting a mark.

10. A conference terminal, **characterized by** comprising:
a selecting module configured to calculate audio energy of a speaker according to real time audio data of the speaker and determine a current speaker according to the audio energy of speaker based on a predetermined rule;
a combining module configured to have the current speaker determined by the selecting module as an object to be highlighted and re-combine real time video data of the speaker; and
a displaying module configured to display the real time video data recombined in the combining module in a form of a video screen.

11. The conference terminal of claim 10, **characterized in that** the selecting module further comprises:
a calculating unit configured to calculate the audio energy of the speaker; and
a selecting unit configured to determine the current speaker according to the audio energy of speaker based on the predetermined rule, the predetermined rule comprising a speaker with maximal audio energy among a group of speakers is determined as the current speaker, or a speaker whose audio energy is above a predetermined threshold among a group of speakers is determined as the current speaker.

12. A system for displaying a speaker in a video conference, **characterized by** comprising a conference terminal according to claim 10, and further comprising:
a conference media server configured to transfer real time audio data and real time video data of a speaker.

13. The system of claim 12, **characterized in that** the conference terminal displays a video screen of the current speaker in accordance with the following steps of:
re-combining the real time video data of the speaker according to a required displaying mode; and
displaying the video screen of the speaker according to the recombined real time video data.

14. The system of claim 13, **characterized in that** the displaying mode comprises:
only displaying the video screen of the current speaker; or
displaying the video screen of the current speaker in a scale larger than video screens of other speakers; or
displaying the video screen of the current speaker by setting a mark.
